# EUROPEAN PATENT APPLICATION

(11) **EP 2 147 707 A1**
(43) Date of publication of application: **27.01.2010**
(21) Application number: 09166024.1
(22) Date of filing: 21.07.2009
(51) Int. Cl.: A63F 13/00

(54) **Image/sound controller and image/sound control method**

(30) Priority: 22.07.2008 JP 2008188655
(71) Applicant: Namco Bandai Games Inc., Shinagawa-ku Tokyo 140-8590 (JP)
(72) Inventor: Yano, Yoshihito, Shinagawa-ku Tokyo 140-8590 (JP)
(74) Representative: Emerson, Peter James

(57) **Abstract**

An image/sound controller reproduces a first contact sound that corresponds to a sound that occurs when a character comes in contact with another object and a second contact sound that corresponds to a sound that occurs when parts of the character come in contact with each other when the character has come in contact with the other object. The image/sound controller changes the reproduction state of the first contact sound and the second contact sound according to the attribute of the other object that comes in contact with the character.

## Description

### BACKGROUND OF THE INVENTION

The present invention relates to an image/sound controller and an image/sound control method.

An image generation system that generates an image of an object space in which an object is disposed and which is viewed from a virtual camera has been known. Such an image generation system may store a plurality of pieces of sound data corresponding to a sound that occurs when a collision between objects occurs in advance, and determine target sound data to be read out according to the state of the object and the like calculated when a collision between the objects has occurred (see JP-A-2007-212635).

However, a related-art image generation system has a problem in that the amount of sound data that must be provided in advance increases when it is desired to output a realistic effect sound so that the sound data creation cost and the required storage capacity increase.

### SUMMARY

According to a first aspect of the invention, there is provided an image/sound controller comprising:
an object space setting section that sets a plurality of objects including a character in an object space;
a movement/motion control section that controls at least one of movement and motion of the character;
a sound control section that instructs reproduction of a first contact sound that corresponds to a sound that occurs when the character comes in contact with another object among the plurality of objects and a second contact sound that corresponds to a sound that occurs when component parts of the character come in contact with each other when the character has come in contact with the other object;
a drawing section that draws the object space as an image; and
a sound processing section that reproduces the first contact sound and the second contact sound,
the sound control section changing a reproduction state of the first contact sound and the second contact sound according to an attribute of the other object with which the character has come in contact.

According to a second aspect of the invention there is provided an image/sound controller comprising:
an object space setting section that sets a plurality of types of objects in an object space;
a movement/motion control section that controls at least one of movement and motion of at least one type of object among the plurality of types of objects;
a sound control section that instructs reproduction of a contact sound that corresponds to a sound that occurs when the objects come in contact with each other when the objects have come in contact with each other;
a drawing section that draws the object space as an image; and
a sound processing section that reproduces the contact sound, the sound control section causing the sound processing section to reproduce an object sound component that is set according to the type of the object and a plurality of common sound components that are set in common for the plurality of types of objects as the contact sound so that a synthesis ratio of the plurality of common sound components is based on an attribute of the object.

According to a third aspect of the invention, there is provided an image/sound control method comprising:
an object space setting step that sets a plurality of objects including a character in an object space;
a movement/motion control step that controls at least one of movement and motion of the character;
a sound control step that instructs reproduction of a first contact sound that corresponds to a sound that occurs when the character comes in contact with another object among the plurality of objects and a second contact sound that corresponds to a sound that occurs when component parts of the character come in contact with each other when the character has come in contact with the other object;
a drawing step that draws the object space as an image; and
a sound processing step that reproduces the first contact sound and the second contact sound,
the sound control step changing a reproduction state of the first contact sound and the second contact sound according to an attribute of the other object with which the character has come in contact.

According to a fourth aspect of the invention, there is provided an image/sound control method comprising:
an object space setting step that sets a plurality of types of objects in an object space;
a movement/motion control step that controls at least one of movement and motion of at least one type of object among the plurality of types of objects;
a sound control step that instructs reproduction of a contact sound that corresponds to a sound that occurs when the objects come in contact with each other when the objects have come in contact with each other;
a drawing step that draws the object space as an image; and
a sound processing step that reproduces the contact sound, the sound control step instructing reproduction of an object sound component that is set according to the type of the object and a plurality of common sound components that are set in common for the plurality of types of objects as the contact sound so that a synthesis ratio of the plurality of common sound components is based on an attribute of the object.

### BRIEF DESCRIPTION OF THE SEVERAL VIEWS OF THE DRAWING

FIG. 1 illustrates the appearance of a game system according to one embodiment of the invention.
FIG. 2 is a functional block diagram of a game system according to one embodiment of the invention.
FIG. 3 illustrates a list of sound data according to one embodiment of the invention.
FIG. 4 is a graph illustrating the volume based on the weight of a character according to one embodiment of the invention.
FIG. 5 illustrating the state of a character and a sound reproduction state according to one embodiment of the invention.
FIGS. 6A and 6B are tables illustrating the volume set for each channel according to one embodiment of the invention.
FIG. 7 is a table illustrating the volume corresponding to the type of ground object according to one embodiment of the invention.
FIG. 8 illustrates a state of a character and a sound reproduction state according to one embodiment of the invention.
FIG. 9 illustrates a state of a character and a sound reproduction state according to one embodiment of the invention.
FIG. 10 is a flowchart illustrating the flow of a process performed by a game system according to one embodiment of the invention.
FIG. 11 is a flowchart illustrating the flow of a process performed by a game system according to one embodiment of the invention.
FIG. 12 illustrates the volume corresponding to the type of ground object according to a modification of one embodiment of the invention.

### DETAILED DESCRIPTION OF THE EMBODIMENT

The invention may provide an image/sound controller and an image/sound control method that can appropriately represent a state when objects come in contact without requiring a large amount of sound data.
(1) According to one embodiment of the invention, there is provided an image/ sound controller comprising:
   an object space setting section that sets a plurality of objects including a character in an object space;
   a movement/motion control section that controls at least one of movement and motion of the character;
   a sound control section that instructs reproduction of a first contact sound that corresponds to a sound that occurs when the character comes in contact with another object among the plurality of objects and a second contact sound that corresponds to a sound that occurs when component parts of the character come in contact with each other when the character has come in contact with the other object;
   a drawing section that draws the object space as an image; and
   a sound processing section that reproduces the first contact sound and the second contact sound,
   the sound control section changing a reproduction state of the first contact sound and the second contact sound according to an attribute of the other object with which the character has come in contact.
   According to one embodiment of the invention, there is provided a program causing a computer to function as the above sections. According to one embodiment of the invention, there is provided a computer-readable information storage medium storing a program that causes a computer to function as the above sections.
   According to the above embodiments, the first contact sound and the second contact sound are reproduced when the character comes in contact with another object, and the reproduction state of the first contact sound and the second contact sound is changed according to the attribute of the other object that comes in contact with the character. This makes it possible to represent a situation in which a sound that occurs when the parts of the character come in contact with each other is change under the influence of the attribute of the other object that comes in contact with the character when the character comes in contact with the other object. Therefore, a state in which the character comes in contact with the other object can be appropriately represented by changing the sound reproduction state, even if the amount of sound data provided in advance is not increased.
(2) In each of the above image/sound controller, program and information storage medium,
   the sound control section may change the volumes of the first contact sound and the second contact sound according to the attribute of the other object that comes in contact with the character.
   This makes it possible to represent a situation in which a sound that occurs when the parts of the character come in contact with each other is changed under the influence of the attribute of the other object that comes in contact with the character by changing the volumes of the first contact sound and the second contact sound.
(3) In each of the above image/sound controller, program and information storage medium,
   the sound control section may cause the sound processing section to reproduce a sound that corresponds to a sound that occurs when the character moves on a surface of the other object as the first contact sound when the character moves on the surface of the other object.
   This makes it possible to represent a situation in which a sound that occurs when the parts of the character come in contact with each other is changed under the influence of the attribute of the other object on which the character moves when the character moves on the surface of the other object.
(4) In each of the above image/sound controller, program and information storage medium,
   the object space setting section may set at least one type of character among a plurality of characters in the object space; and
   the sound control section may cause the sound processing section to reproduce a character sound component that is set according to the type of character and a plurality of common sound components that are set in common for the plurality of characters as the first contact sound so that a synthesis ratio of the plurality of common sound components is based on the attribute of the character.
   This makes it possible to represent a change in the first contact sound based on the attribute of the character by changing the character sound component according to the type of the character, and changing the synthesis ratio of the plurality of common sound components.
(5) According to one embodiment of the invention, there is provided an image/sound controller comprising:
   an object space setting section that sets a plurality of types of objects in an object space;
   a movement/motion control section that controls at least one of movement and motion of at least one type of object among the plurality of types of objects;
   a sound control section that instructs reproduction of a contact sound that corresponds to a sound that occurs when the objects come in contact with each other when the objects have come in contact with each other;
   a drawing section that draws the object space as an image; and
   a sound processing section that reproduces the contact sound, the sound control section causing the sound processing section to reproduce an object sound component that is set according to the type of the object and a plurality of common sound components that are set in common for the plurality of types of objects as the contact sound so that a synthesis ratio of the plurality of common sound components is based on an attribute of the object.
   According to one embodiment of the invention, there is provided a program causing a computer to function as the above sections. According to one embodiment of the invention, there is provided a computer-readable information storage medium storing a program that causes a computer to function as the above sections.
   This makes it possible to represent a change in the contact sound according to the attribute of the object by changing the object sound component according to the object and changing the synthesis ratio of the plurality of common sound components.
(6) In each of the above image/sound controller, program and information storage medium,
   the object space setting section may set the plurality of types of objects including a plurality of types of characters in the object space;
   the movement/motion control section may control at least one of movement and motion of the plurality of types of characters; and
   the sound control section may cause the sound processing section to reproduce a first contact sound that corresponds to a sound that occurs when one type of character among the plurality of types of characters comes in contact with another object among the plurality of types of the objects as the contact sound when the one type of character has come in contact with the other object, and may cause the sound processing section to reproduce a character sound component that is set according to the type of the character and a plurality of common sound components that are set in common for the plurality of types of characters as the first contact sound so that a synthesis ratio of the plurality of common sound components is based on an attribute of the one type of character.
   This makes it possible to represent a change in the first contact sound according to the attribute of the one type of character by changing the character sound component according to the type of character and changing the synthesis ratio of the plurality of common sound components.
(7) In each of the above image/sound controller, program and information storage medium,
   the object space setting section may set the plurality of types of objects including a plurality of types of characters in the object space;
   the movement/motion control section may control at least one of movement and motion of the plurality of types of characters; and
   the sound control section may cause the sound processing section to reproduce a second contact sound that corresponds to a sound that occurs when a plurality of component parts of one type of the plurality of types of characters come in contact with each other as the contact sound when the plurality of component parts of the one type of the plurality of types of characters have come in contact with each other, and may cause the sound processing section to reproduce a part sound component that is set according to the type of each of the plurality of component parts and a plurality of common sound components that are set in common for the plurality of component parts as the second contact sound so that a synthesis ratio of the plurality of common sound components is based on the attribute of each of the plurality of component parts.
   This makes it possible to represent a change in the second contact sound according to the attribute of each of the component parts by changing the part sound component depending on a component part to be contacted among the plurality of component parts and changing the synthesis ratio of the plurality of common sound components.
(8) According to one embodiment of the invention, there is provided an image/sound control method comprising:
   an object space setting step that sets a plurality of objects including a character in an object space;
   a movement/motion control step that controls at least one of movement and motion of the character;
   a sound control step that instructs reproduction of a first contact sound that corresponds to a sound that occurs when the character comes in contact with another object among the plurality of objects and a second contact sound that corresponds to a sound that occurs when component parts of the character come in contact with each other when the character has come in contact with the other object;
   a drawing step that draws the object space as an image; and
   a sound processing step that reproduces the first contact sound and the second contact sound, the sound control step changing a reproduction state of the first contact sound and the second contact sound according to an attribute of the other object with which the character has come in contact.
(9) According to one embodiment of the invention, there is provided an image/sound control method comprising:
   an object space setting step that sets a plurality of types of objects in an object space;
   a movement/motion control step that controls at least one of movement and motion of at least one type of object among the plurality of types of objects;
   a sound control step that instructs reproduction of a contact sound that corresponds to a sound that occurs when the objects come in contact with each other when the objects have come in contact with each other;
   a drawing step that draws the object space as an image; and
   a sound processing step that reproduces the contact sound, the sound control step instructing reproduction of an object sound component that is set according to the type of the object and a plurality of common sound components that are set in common for the plurality of types of objects as the contact sound so that a synthesis ratio of the plurality of common sound components is based on an attribute of the object.

Some embodiments of the invention will be described below. Note that the embodiments described below do not in any way limit the scope of the invention laid out in the claims herein. In addition, not all of the elements of the embodiments described below should be taken as essential requirements of the invention.

### 1. Outline of entire system

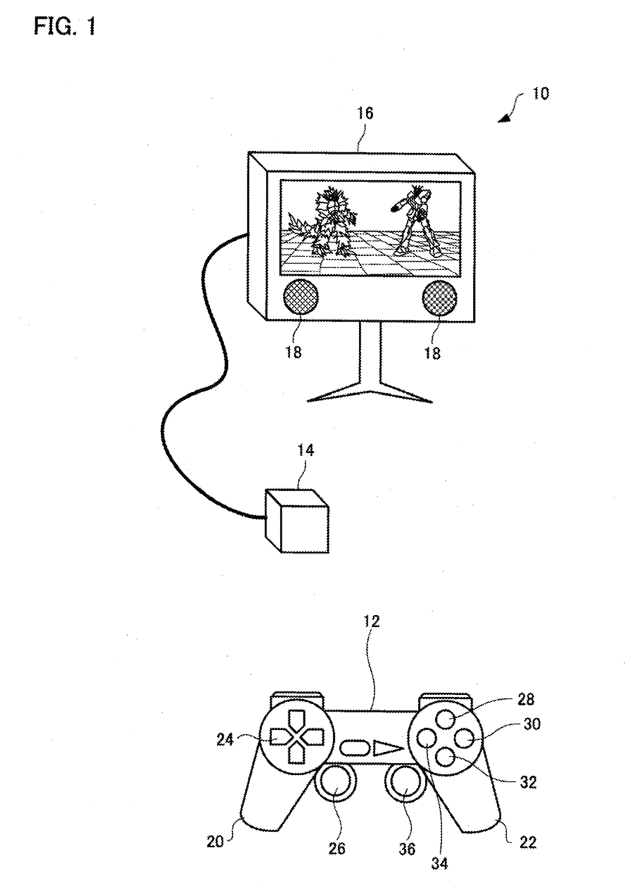

FIG. 1 illustrates the appearance of a game system 10 (image/sound controller) according to one embodiment of the invention. The game system 10 according to this embodiment includes a controller 12 that allows the player to input operation information, a main device 14 that generates a game image and game sound based on the operation information from the controller 12, a display 16 that displays the game image generated by the main device 14, and a speaker 18 that outputs the game sound generated by the main device 14.

As illustrated in FIG. 1, the controller 12 includes a left grip 20 that is held by the player with the left hand, and a right grip 22 that is held by the player with the right hand. A cross-shaped direction key 24 and a left analog stick 26 that can be operated by the left thumb of the player who holds the left grip 20 with the left hand are provided on the left side of the front surface of the controller 12. The direction key 24 outputs a different signal according to the position of the direction key 24 pressed by the player. The left analog stick 26 outputs a different signal according to the angle and the direction of the left analog stick 26 operated by the player. First to fourth buttons 28 to 34 and a right analog stick 36 that can be operated by the right thumb of the player who holds the right grip 22 with the right hand are provided on the right side of the front surface of the controller 12. The first to fourth buttons 28 to 34 output different signals according to the button pressed by the player. The right analog stick 36 outputs a different signal according to the angle and the direction of the right analog stick 36 operated by the player.

The main device 14 executes a fighting game in which a player's character operated by the player fights against a computer character operated by the computer. The main device 14 generates a three-dimensional image in which the player's character and the computer character move and make a motion in real time in an object space based on the operation information from the controller 12, various types of data, a program, and the like, and causes the display 16 to display the generated image. The main device 14 generates game sound according to the game state, and causes the speaker 18 to output the generated game sound. The main device 14 according to this embodiment causes the display 16 to display an image in which the player's character walks or runs (this is one of various types of contacts) in the direction in which the left analog stick 26 is pushed, causes the speaker 18 to output the footstep of the player's character, causes the display 16 to display an image in which the player's character jumps at a timing at which the first button 28 is pressed, and causes the speaker 18 to output landing sound of the player's character at a timing at which the player's character lands (this is one of various types of contacts).

### 2. Functional blocks

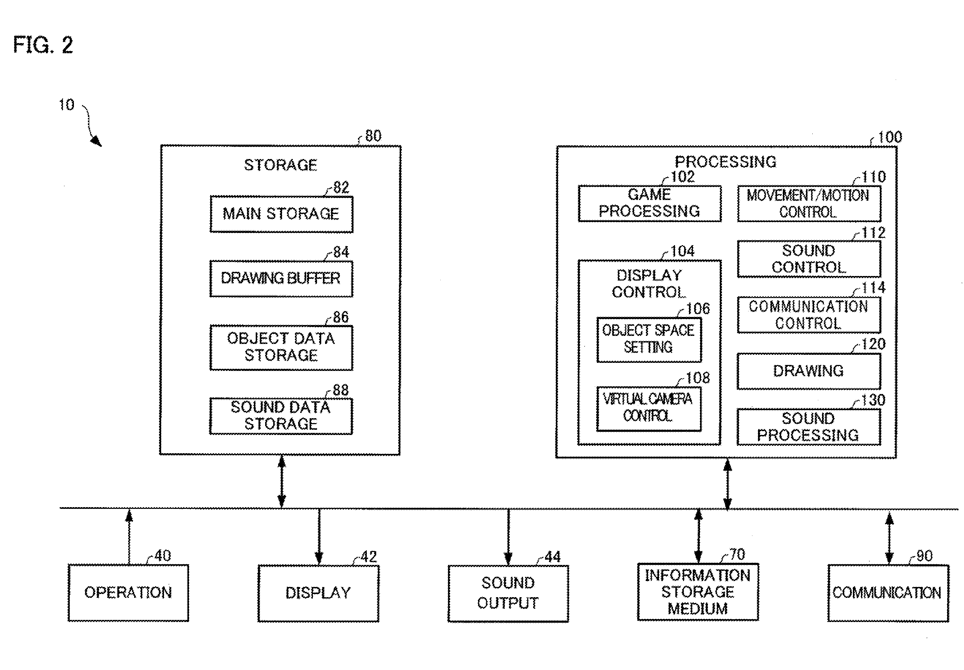

FIG. 2 illustrates an example of a functional block diagram of a game system according to one embodiment of the invention. Note that the game system according to this embodiment may have a configuration in which some of the elements in FIG. 2 are omitted.

An operation section 40 allows the player to input operation information. The function of the operation section 40 may be implemented by the direction key 24, the left analog stick 26, the first to fourth buttons 28 to 34, the right analog stick 36 illustrated in FIG. 1, an analog pad, a lever, a steering wheel, or the like.

A display section 42 outputs an image generated by the game system. The function of the display section 42 may be implemented by a CRT display, a liquid crystal display, a plasma display, a projector, a head mount display, or the like.

A sound output section 44 outputs sound generated by the game system. The function of the sound output section 44 may be implemented by the speaker 18 illustrated in FIG. 1, a headphone, or the like.

An information storage medium 70 (computer-readable medium) stores a program, data, and the like. The function of the information storage medium 46 may be implemented by a memory card, an optical disk (CD or DVD), a magneto-optical disk (MO), a magnetic disk, a hard disk, a magnetic tape, or the like.

The information storage medium 70 stores a program and data that cause a processing section 100 to perform various processes. Specifically, the information storage medium 70 stores a program that causes a computer to function as each section according to this embodiment (or a program that causes a computer to perform the process of each section). The information storage medium 70 also stores various types of data such as model data and an attribute parameter of an object (e.g., character) and sound data (e.g., effect sound and music sound). In this embodiment, the information storage medium 70 stores digital data encoded by the PCM method, the ADPCM method, or the like as the sound data.

A storage section 80 functions as a work area for the processing section 100, a communication section 90, and the like. The function of the storage section 80 may be implemented by a RAM, a VRAM, or the like. The storage section 80 according to this embodiment includes a main storage section 82 that is used as a work area for the processing section 100, a drawing buffer 84 in which an image displayed on the display section 42 is drawn, an object data storage section 86 that stores object data (e.g., model data and an attribute parameter of an object), and a sound data storage section 88 that stores sound data output by the sound output section 44.

The communication section 90 performs various types of control that enables communication with the outside (e.g., server or another portable terminal). The function of the communication section 90 may be implemented by hardware such as a processor or a communication integrated circuit (ASIC), a program, and the like.

A program (data) that causes a computer to function as each section according to this embodiment may be distributed to the information storage medium 70 (storage section 80) from an information storage medium 70 included in a host device (server) through a network and the communication section 90. The scope of the invention also includes use of the information storage medium 70 of the host device (server).

The processing section 100 (processor) performs a game process, an image generation process, a sound generation process, and the like based on operation data from the operation section 40, a program, and the like. The processing section 100 performs various processes using the storage section 80 as a work area. The function of the processing section 100 may be implemented by hardware such as a processor (e.g., CPU or DSP) or an integrated circuit (IC) (e.g., ASIC) and a program.

The processing section 100 according to this embodiment includes a game processing section 102, a display control section 104, an object space setting section 106, a virtual camera control section 108, a movement/motion control section 110, a sound control section 112, a communication control section 114, a drawing section 120, and a sound processing section 130. Note that the processing section 100 may have a configuration in which some of these sections are omitted.

The game processing section 102 starts the game when game start conditions have been satisfied, proceeds with the game, calculates game results, and finishes the game when game finish conditions have been satisfied, for example.

The display control section 104 controls display of an image (object image) displayed on the display section 42. Specifically, the display control section 104 generates a display target object (such as character as an example of specific object, moving object as an example of specific object, course, building, tree, pillar, wall, map, or background), indicates display of an object or a display position, or causes an object to disappear, for example. Specifically, the display control section 104 registers a generated object in an object list, transfers the object list to the drawing section 120 or the like, or deletes an object that has disappeared from the object list, for example.

When an object has moved or made a motion due to the operation information input by the player, a program, or the like, the display control section 104 displays an image that shows the movement or motion of the object. The game system 10 according to this embodiment sets an object in the three-dimensional object space. The display control section 104 includes the object space setting section 106 and the virtual camera control section 108.

The object space setting section 106 disposes an object (an object formed by a primitive such as a polygon, a free-form surface, or a subdivision surface) that represents a display object (e.g., character, moving object, course, building, tree, pillar, wall, map, or background) in the object space. Specifically, the object space setting section 106 determines the position and the rotational angle (synonymous with orientation or direction) of the object in a world coordinate system, and disposes the object at the determined position (X, Y, Z) and the determined rotational angle (rotational angles around X, Y, and Z axes).

The virtual camera control section 108 controls a virtual camera (viewpoint) for generating an image viewed from a given (arbitrary) viewpoint in the object space. Specifically, the virtual camera control section 108 controls the position (X, Y, Z) or the rotational angle (rotational angles around X, Y, and Z axes) of the virtual camera (controls the viewpoint position, direction, or angle of view).

For example, when photographing a character using the virtual camera, the virtual camera control section 108 sets a gaze point (an example of position information of a specific object) that specifies the direction of the virtual camera on the character, and controls the position or the rotational angle (direction) of the virtual camera so that the virtual camera aims at the gaze point that changes according to a change in the position or rotation of the character. In this case, the virtual camera may be controlled based on information such as the position, the rotational angle, or the speed of the character (gaze point) calculated by the movement/motion control section 110 described later. Alternatively, the virtual camera control section 108 may rotate the virtual camera by a predetermined rotational angle, or may move the virtual camera along a predetermined path. In this case, the virtual camera control section 108 controls the virtual camera based on predetermined control information for specifying the position (moving path) or the rotational angle of the virtual camera.

The movement/motion control section 110 calculates the movement/motion of a character (movement/motion simulation). Specifically, the movement/motion control section 110 causes the character to move in the object space or causes the character to make a motion (animation) based on operation information from the operation section 40, a program (movement/motion algorithm), various types of data (motion data), and the like. Specifically, the movement/motion control section 110 performs a simulation process that sequentially calculates movement information (position, rotational angle, speed, or acceleration) and motion information (about the position or the rotational angle of each part that forms a moving object) of the character every frame (1/60th of a second). Note that the term "frame" refers to a time unit when performing the character movement/motion process (simulation process) or the drawing process. Note that the movement/motion control section 110 may control the movement or the motion of the character, and may control the movement and the motion of the character.

In this embodiment, an attribute parameter, movement pattern data, a movement/motion algorithm, motion data, and the like are set according to each of a plurality of characters. The movement/motion control section 110 causes the character to move or make a motion based on operation information from the operation section 40, the attribute parameter, the movement pattern data, and the like. The movement/motion control section 110 calculates the moving amount (the moving speed of the moving object) and the rotation amount (rotational speed) of the character for each frame to calculate a coordinate transformation matrix M of the moving object. The movement/motion processing section 110 multiplies vertex coordinates P_{K-1} of the moving object in the (K-1)th frame by the coordinate transformation matrix M to calculate vertex coordinates P_{K} (=P_{K-1}×M) of the moving object in the Kth frame.

The sound control section 112 causes the sound processing section 130 to reproduce the sound data that corresponds to the game state and is stored in the sound data storage section 88 based on operation information from the operation section 40, a program, various types of data, and the like. The sound control section 112 causes the sound processing section 130 to reproduce a first contact sound that corresponds to a sound that occurs when the character comes in contact with another object and a second contact sound that corresponds to a sound that occurs when parts of the character come in contact with each other when the character has come in contact with another object. For example, when a movement event in which the character moves on (this is one of various types of contacts) the surface of another object has occurred, the sound control section 112 causes the sound processing section 130 to reproduce sound data that corresponds to the footstep (an example of a first contact sound) of the character as well as sound data corresponding to part sound (an example of a second contact sound) that occurs when contact between parts (or component parts) of the character, contact between parts (or component parts) of an accessory worn by the character, or contact between a part of the character and an accessory worn by the character occurs.

Specifically, when a walking event in which the character walks on the surface of a ground object has occurred, the sound control section 112 sets sequence data corresponding to the walking event, and causes the sound processing section 130 to reproduce sound data that corresponds to the footstep and sound data that corresponds to the part sound at a timing based on the sequence data. Specifically, when a running event in which the character runs on the surface of a ground object has occurred, the sound control section 112 sets sequence data corresponding to the running event, and causes the sound processing section 130 to reproduce sound data that corresponds to the footstep and sound data that corresponds to the part sound at a timing based on the sequence data.

Specifically, the first contact sound sequence data and the second contact sound sequence data are configured so that the footstep and the part sound of a character A are output in synchronization with a timing at which the foot of the character A comes in contact with the ground object in the game image. Specifically, the sound control section 112 causes the sound processing section 130 to reproduce the first contact sound and the second contact sound so that the first contact sound and the second contact sound are output in synchronization with a timing at which the character comes in contact with the ground object.

The sound control section 112 changes the reproduction state of the first contact sound and the second contact sound according to the attribute of another object that comes in contact with the character. In this embodiment, a different hardness (an example of attribute) is set for each of a plurality of ground objects (an example of another object). The sound control section 112 sets the volume (an example of reproduction state) of the first contact sound and the second contact sound according to the hardness of the ground object on which the character moves to change the reproduction state of the sound reproduced by the sound processing section 130.

For example, the sound control section 112 relatively turns up the volume of the first contact sound and the second contact sound when the character moves on the surface of a hard ground object, and relatively turns down the volume of the first contact sound and the second contact sound when the character moves on the surface of a soft ground object. Specifically, the sound control section 112 changes the reproduction state of the first contact sound and the second contact sound according to the hardness of the ground object that comes in contact with the character.

The sound control section 112 changes the tone (an example of reproduction state) of the first contact sound according to the attribute of the character. In this embodiment, different weights (an example of attribute) are set for a plurality of characters. The sound control section 112 causes the sound processing section 130 to reproduce a character sound component that is set according to the type of character and a plurality of common sound components that are set in common for the plurality of characters as the first contact sound so that the volume ratio (an example of synthesis ratio) of the plurality of common sound components is based on the weight of the character. Specifically, the sound control section 112 changes the tone of the first contact sound for each character by setting the volume of the plurality of common sound components based on the weight of the character and setting the character sound component according to the type of character.

The sound control section 112 causes the sound processing section 130 to reproduce a third contact sound that corresponds to a sound that occurs when component parts of the character come in contact with each other together with the first and second contact sounds at a timing differing from (asynchronous with) a timing at which the character comes in contact with another object when the character does not come in contact with another object. Specifically, third contact sound sequence data is configured so that the part sound of a character A is output in synchronization with a timing at which the character A moves the arms and legs (an example of traveling motion) in the game image in order to walk or run. Specifically, the sound control section 112 causes the sound processing section 130 to reproduce the third contact sound in synchronization with a timing at which the character makes a motion in order to travel on the surface of the ground object.

The communication control section 114 generates a packet transmitted to another game system 10, designates the network address of the packet transmission destination game system 10, stores the received packet in the storage section 80, analyzes a received packet, and controls the communication section 90 relating to packet transmission/reception, for example. In this embodiment, the communication control section 114 generates a data packet and a command packet necessary for executing a breeding game through a network (e.g., Internet), and causes the communication section 90 to transmit and receive the data packet and the command packet.

The drawing section 120 performs a drawing process based on the results of various processes (game process) performed by the processing section 100 to generate an image, and outputs the generated image to the display section 42. When generating a three-dimensional game image, the drawing section 120 receives display object data (object data or model data) including vertex data (such as vertex position coordinates, texture coordinates, color data, normal vector, or alpha value) corresponding to each vertex that defines the display object (object or model), and performs a vertex process based on the vertex data included in the display object data. When performing the vertex process, the drawing section 120 may perform a vertex generation process (tessellation, surface division, or polygon division) for dividing the polygon, if necessary. In the vertex process, the drawing section 120 performs a vertex movement process and a geometric process such as coordinate transformation (world coordinate transformation or camera coordinate transformation), clipping, perspective transformation, or a light source process, and changes (updates or adjusts) the vertex data relating to the vertices that form the display object based on the processing results. The drawing section 120 then performs a rasterization process (scan conversion) based on the vertex data changed by the vertex process so that the surface of the polygon (primitive) is associated with pixels. The drawing section 120 then performs a pixel process (fragment process) that draws pixels that form the image (fragments that form the display screen). In the pixel process, the drawing section 120 determines the drawing color of each pixel that forms the image by performing various processes such as texture reading (texture mapping), color data setting/change, translucent blending, and anti-aliasing, and outputs (draws) the drawing color of the object subjected to perspective transformation to a drawing buffer 84 (VRAM or rendering target) that can store image information in pixel units. Specifically, the pixel process includes a per-pixel process that sets or changes the image information (e.g., color, normal, luminance, and alpha value) in pixel units.

The vertex process and the pixel process performed by the drawing section 120 may be implemented by hardware that enables a programmable polygon (primitive) drawing process (or programmable shader such as vertex shader and pixel shader) based on a shader program written using a shading language. The programmable shader enables a programmable per-vertex process and per-pixel process to increase the degree of freedom relating to the drawing process so that the representation capability is significantly improved as compared with a fixed hardware drawing process.

The drawing section 120 performs a geometric process, a texture mapping process, a hidden surface removal process, an alpha blending process, and the like when drawing the display object.

In the geometric process, the drawing section 120 performs a coordinate transformation process, a clipping process, a perspective transformation process, a light source calculation process, and the like on the display object. The display object data (e.g., display object's vertex position coordinates, texture coordinates, color data or luminance data, normal vector, or alpha value) after the geometric process (after perspective transformation) is stored in the main storage section 82.

The term "texture mapping process" refers to a process that maps a texture (texel value) stored in the storage section 80 on the display object. Specifically, the drawing section 120 reads a texture (surface properties such as color (RGB) and alpha value) from the storage section 80 using the texture coordinates set (assigned) for the vertices of the display object, for example. The drawing section 120 then maps the texture (two-dimensional image) on the display object. In this case, the drawing section 130 performs a pixel-texel association process, a bilinear interpolation process (texel interpolation process), and the like.

The drawing section 120 may perform a hidden surface removal process by a Z-buffer method (depth comparison method or Z-test) using a Z-buffer (depth buffer) that stores the Z-value (depth information) of the drawing pixel. Specifically, the drawing section 120 refers to the Z-value stored in the Z-buffer when drawing the drawing pixel corresponding to the primitive of the object. The drawing section 120 compares the Z-value stored in the Z-buffer with the Z-value of the drawing pixel of the primitive. When the Z-value of the drawing pixel is the Z-value in front of the virtual camera (e.g., a small Z-value), the drawing section 120 draws the drawing pixel and updates the Z-value stored in the Z-buffer with a new Z-value.

The term "alpha blending" refers to a translucent blending process (e.g., normal alpha blending, additive alpha blending, or subtractive alpha blending) based on the alpha value (A value). In the normal alpha blending process, the drawing section 120 calculates a color obtained by blending two colors by performing a linear interpolation process using the alpha value as the degree of blending.

The term "alpha value" refers to information that can be stored in association with each pixel (texel or dot), such as additional information other than the color information that indicates the luminance of each RGB color component. The alpha value may be used as mask information, translucency (equivalent to transparency or opacity), bump information, or the like.

The sound processing section 130 performs a sound generation process based on the results of various processes performed by the processing section 100 to generate game sound such as background music (BGM), effect sound, or voice, and outputs the generated game sound to the sound output section 44. Specifically, the sound processing section 130 reads the sound data stored in the sound data storage section 88 in each of 24 channels while decoding the sound data based on control information from the sound control section 112 at a timing according to the sequence data. The sound processing section 130 performs a volume adjustment process in each channel, an effect process (an example of tone adjustment process) such as a reverb process and a modulation process, and the like, synthesizes the sound data for each channel, and converts the resulting signal into an analog signal. Specifically, the sound processing section 130 reproduces the game sound while changing the reproduction state (e.g., volume and tone) of the game sound for each channel.

The image generation system according to this embodiment may be a system dedicated to a single-player mode that allows only one player to play the game, or may be a system that is provided with a multi-player mode in which a plurality of players can play the game. When a plurality of players play the game, a game image and game sound supplied to each player may be generated using one terminal, or may be generated by a distributed process using a plurality of terminals (game devices or portable telephones) connected through a network (transmission line or communication line), for example.

### 3. Method according to this embodiment

A method employed for the game system 10 according to this embodiment is described in detail below. The game system 10 according to this embodiment reproduces the footstep of the character and the part sound that occurs when parts of the character come in contact with each other when the character moves on the surface of the ground object.

### 3-1. Reproduction of contact sound according to type of character

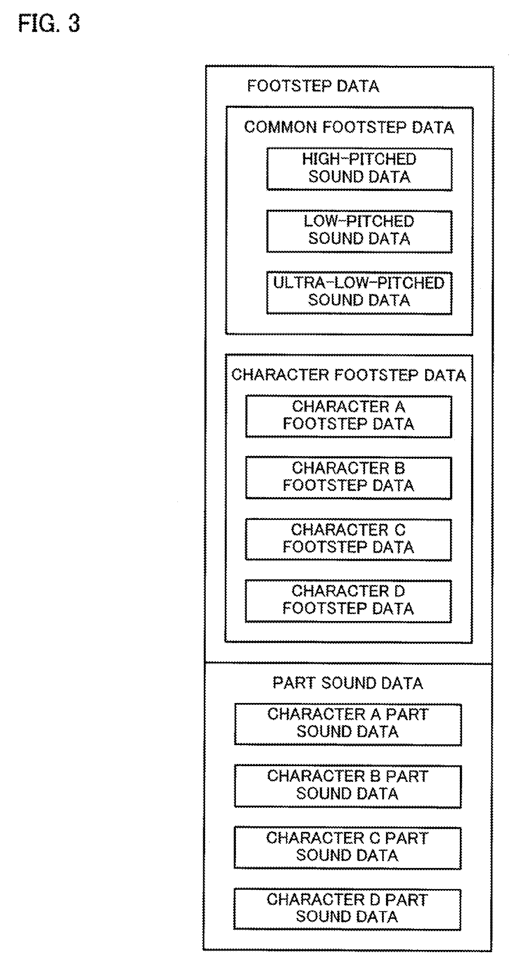

FIG. 3 illustrates a list of sound data stored in the information storage medium 70 of the game system 10 according to this embodiment. In this embodiment, footstep data that corresponds to the footstep of the character and part sound data that corresponds to the part sound are stored in the information storage medium 70, as illustrated in FIG. 3. Necessary sound data is read from the information storage medium 70 and stored in the sound data storage section 88.

In this embodiment, characters A to D (examples of a plurality of characters) are provided as characters that play a match. These characters differ in the material of the character, the material of the accessory (such as clothes and footwear), and the attribute (such as weight, height, and pace) of the character. Therefore, a plurality of pieces of character footstep data (an example of character sound components) that differ in waveform are stored in the information storage medium 70 in association with the types of the characters.

In this embodiment, when the player's character and the computer character that play a match have been selected from the characters A to D, the character footstep data corresponding to the selected characters is read from the information storage medium 70 and stored in the sound data storage section 88. For example, when the character A has been selected as the player's character and the character B has been selected as the computer character, the character A footstep data and the character B footstep data are stored in the sound data storage section 88.

In this embodiment, a plurality of pieces of common footstep data (an example of common sound components) set in common for the characters A to D are provided. The plurality of pieces of common footstep data are read from the information storage medium 70 and stored in the sound data storage section 88 regardless of the selected characters. The plurality of pieces of common footstep data include high-pitched sound data that corresponds to a high-pitched sound component, low-pitched sound data that corresponds to a low-pitched sound component, and ultra-low-pitched sound data that corresponds to an ultra-low-pitched sound component.

In this embodiment, four channels are assigned to the footstep data of each character. One of the character A footstep data to the character D footstep data is read in one channel based on the character that has walked or run, and the high-pitched sound data, the low-pitched sound data, and the ultra-low-pitched sound data are read in the remaining three channels. For example, when the character A has walked, the character A footstep data, the high-pitched sound data, the low-pitched sound data, and the ultra-low-pitched sound data are read as the footstep data of the character A. When the character B has walked, the character B footstep data, the high-pitched sound data, the low-pitched sound data, and the ultra-low-pitched sound data are read as the footstep data of the character B.

The four pieces of footstep component data are synthesized for each character, and reproduced as the footstep of one character. In this embodiment, the volume of the high-pitched sound data, the low-pitched sound data, and the ultra-low-pitched sound data is set so that the volume ratio of such sound data is based on the weight of each character.

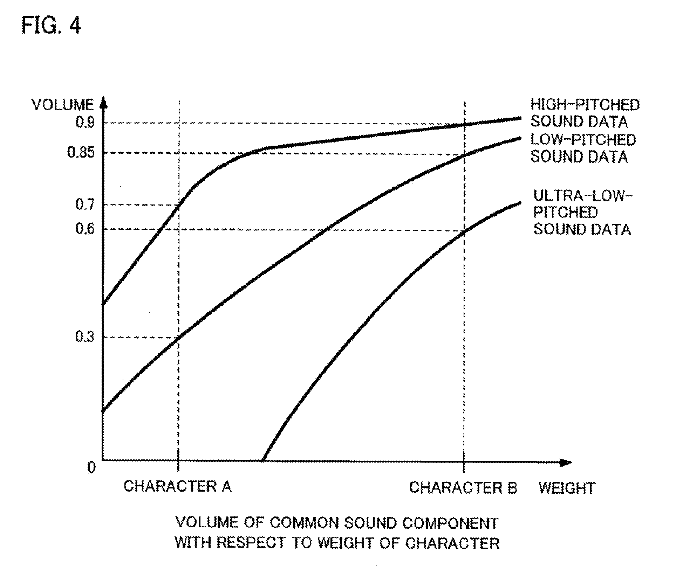

FIG. 4 is a graph illustrating the volumes of the high-pitched sound data, the low-pitched sound data, and the ultra-low-pitched sound data with respect to the weight of the character. In FIG. 4, the vertical axis indicates the volume, and the horizontal axis indicates the weight of the character. In this embodiment, the volume increase rate of the high-pitched sound data with respect to an increase in weight of the character is relatively high in the range in which the weight of the character low, as illustrated in FIG. 4. On the other hand, the volume increase rate of the high-pitched sound data with respect to an increase in weight of the character is relatively low in the range in which the weight of the character is medium to high. The volume increase rate of the low-pitched sound data with respect to an increase in weight of the character is almost constant in the range in which the weight of the character is low to high. The volume increase rate of the ultra-low-pitched sound data with respect to an increase in weight of the character is zero in the range in which the weight of the character is low, and is almost constant in the range in which the weight of the character is low to high.

In the example in FIG. 4, the volume of the high-pitched sound data is set at 0.7, the volume of the low-pitched sound data is set at 0.3, and the volume of the ultra-low-pitched sound data is set at 0.0 for the character A that weighs 50 kg. On the other hand, the volume of the high-pitched sound data is set at 0.9, the volume of the low-pitched sound data is set at 0.85, and the volume of the ultra-low-pitched sound data is set at 0.6 for the character B that weighs 100 kg.

Specifically, the volume of the common footstep data is set so that the volume is turned up as the weight of the character increases. The volume of the common footstep data is set so that the ratio of the volume of the high-pitched sound data relatively increases in the range in which the weight of the character is low and the ratio of the volume of the ultra-low-pitched sound data relatively increases in the range in which the weight of the character is high. According to this embodiment, the tone of the footstep can be changed based on the weight of the character while utilizing the common sound data for each character. Since the volumes of the character A footstep data to the character D footstep data are set in advance for each character, the volumes of the character A footstep data to the character D footstep data based on the weight of the character are set at 1.0.

In this embodiment, a plurality of pieces of part sound data that differ in waveform are stored in the information storage medium 70 in association with the types of characters. In this embodiment, when the player's character and the computer character that play a match have been selected from the characters A to D, the part sound data corresponding to the selected character is read from the information storage medium 70 and stored in the sound data storage section 88. For example, when the character A has been selected as the player's character and the character B has been selected as the computer character, the character A part sound data and the character B part sound data are stored in the sound data storage section 88.

In this embodiment, one channel is assigned to the part sound data of each character. One of the character A part sound data to the character D part sound data is read in one channel based on the type of the character that has walked or run. For example, when the character A has walked, the character A part sound data is read from the information storage medium 70. When the character B has walked, the character B part sound data is read from the information storage medium 70. Since the volumes of the character A part sound data to the character D part sound data are set in advance for each character, the volumes of the character A part sound data to the character D part sound data based on the weight of the character are set at 1.0.

In this embodiment, four pieces of footstep component data are read as the footstep data of one character in the four channels, and the part sound data of one character is read in one channel, as described above. The sound data for each channel is synthesized and reproduced as the footstep and the part sound of one character.

### 3-2. Reproduction of contact sound based on ground object

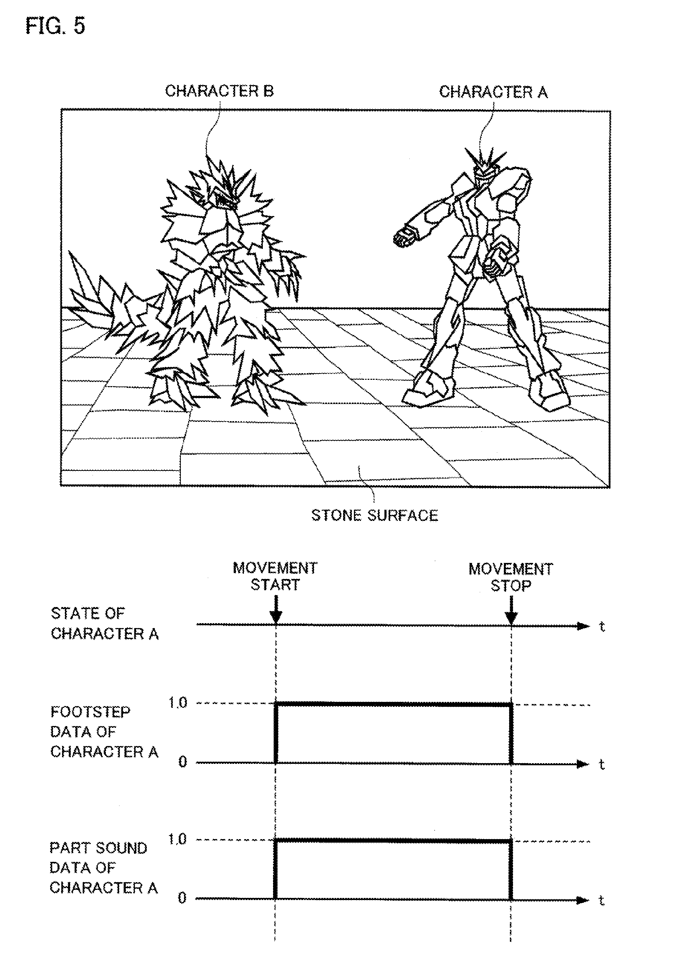

FIG. 5 illustrates the state of the character in the object space and the sound reproduction state. In the example in FIG. 5, a stone surface is disposed as the ground object on which the character moves. The stone surface is hard. In the real world, a large impact occurs when a person walks or runs on such a stone surface so that a high footstep occurs. In this embodiment, when the stone surface is disposed as the ground object, as illustrated in FIG. 5, the volume of the entire footstep data that includes the above-described four pieces of footstep component data is set at 1.0 (maximum value).

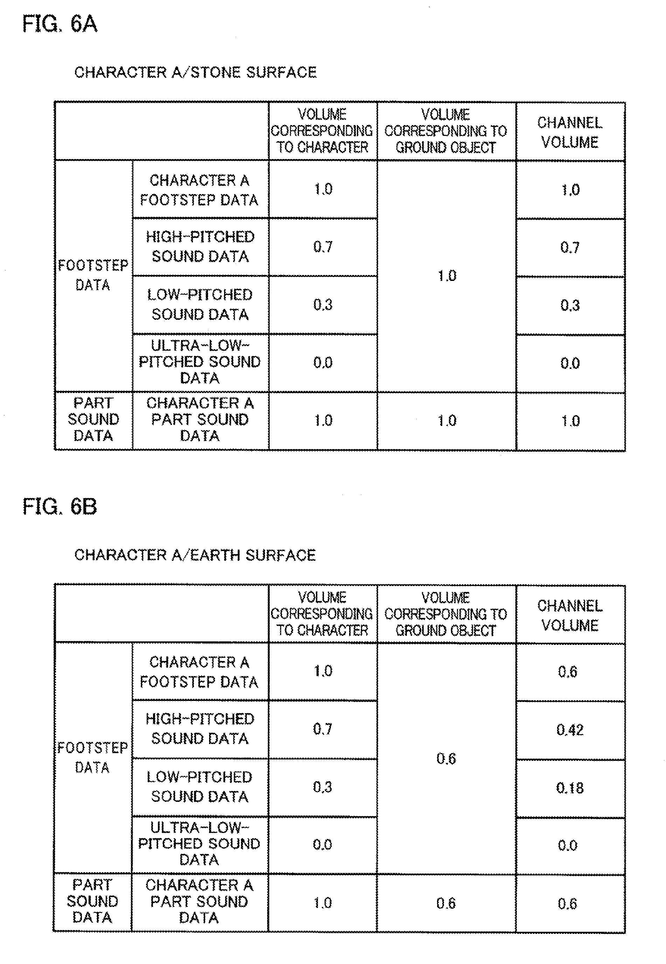

Specifically, a value obtained by multiplying the volume based on the weight of character that is set for each channel through which the four pieces of footstep component data are read by the volume (1.0) of the entire footstep data is set to be the final volume of each channel. For example, when the stone surface is disposed as the ground object, the volume of the channel for the character A footstep data is 1.0×1.0=1.0, the volume of the channel for the high-pitched sound data is 0.7×1.0=0.7, the volume of the channel for the low-pitched sound data is 0.3×1.0=0.3, and the volume of the channel for the ultra-low-pitched sound data is 0.0×1.0=0.0, as illustrated in FIG. 6A.

When a large impact occurs when the character walks or runs on the stone surface, the impact is also transmitted to the parts of the character. Therefore, it is considered that the part sound that occurs when the parts come in contact with each other becomes louder. Therefore, when the stone surface is disposed as the ground object, as illustrated in FIG. 5, the volume of the part sound data according to the hardness of the ground object is set at 1.0 (maximum value). Accordingly, the volume of the channel for the character A part sound data is 1.0×1.0=1.0, as illustrated in FIG. 6A.

When the character A moves on the stone surface, as illustrated in FIG. 5, the footstep data of the character A is read at a timing according to the sequence data during movement of the character A in a state in which the volume of the footstep data according to the hardness of the ground object is set at 1.0. The part sound data of the character A is also read at a timing according to the sequence data during movement of the character A in a state in which the volume of the part sound data according to the hardness of the ground object is set at 1.0.

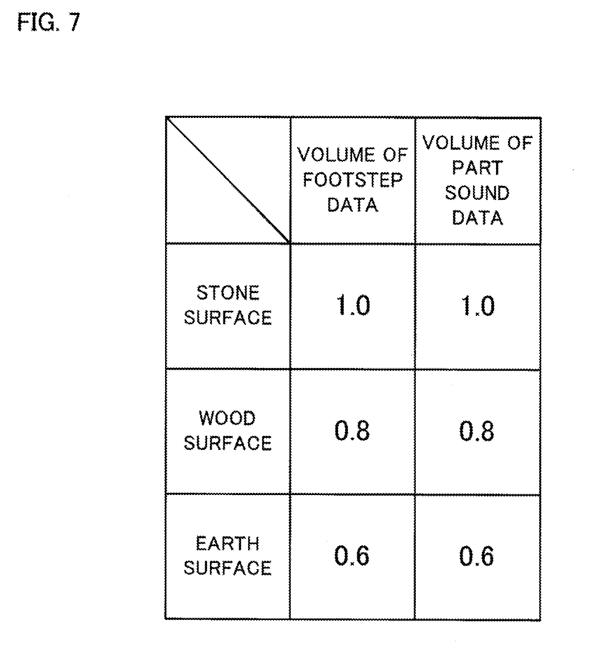

FIG. 7 is a table illustrating the volumes of the footstep data and the part sound data according to the type of ground object. In this embodiment, a wood surface or an earth surface is disposed as the ground object instead of the stone surface. In the real world, since a wood surface is softer than a stone surface, the wood surface has high impact absorption. Therefore, since an impact that occurs when a person walks or runs on the wood surface is lower than that when a person walks or runs on the stone surface, the volume of the footstep decreases. Therefore, when the wood surface is disposed as the ground object, the volume of the footstep data according to the hardness of the ground object is set at 0.8 that is lower than that when the stone surface is disposed, as illustrated in FIG. 7.

Since an impact transmitted to the parts of the character decreases when an impact that occurs when the character walks or runs decreases, it is considered that the volume of the part sound that occurs when the parts come in contact with each other decreases. Therefore, when the wood surface is disposed as the ground object, the volume of the part sound data according to the hardness of the ground object is also set at 0.8 that is lower than that when the stone surface is disposed, as illustrated in FIG. 7.

Since an earth surface is softer than a wood surface, an impact that occurs when a person walks or runs on the earth surface is lower than that when a person walks or runs on the wood surface. Therefore, when the earth surface is disposed as the ground object, the volume of the footstep data according to the hardness of the ground object is set at 0.6 that is lower than that when the wood surface is disposed, as illustrated in FIG. 7. The volume of the part sound data according to the hardness of the ground object is also set at 0.6 that is lower than that when the wood surface is disposed. According to this embodiment, the volumes of the footstep data and the part sound data are set at a relatively large value when the ground object is hard, and set at a relatively small value when the ground object is soft.

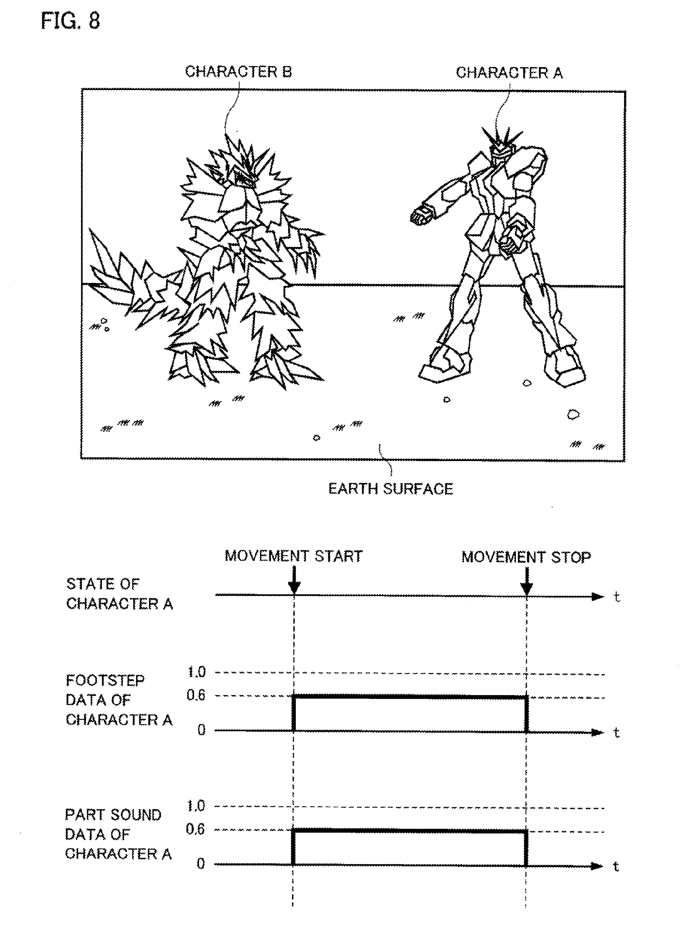

Therefore, when the character A moves on the earth surface, the footstep data of the character A is read at a timing according to the sequence data during movement of the character A in a state in which the volume of the footstep data according to the hardness of the ground object is set at 0.6, as illustrated in FIG. 8. The part sound data of the character A is also read at a timing according to the sequence data during movement of the character A in a state in which the volume of the part sound data according to the hardness of the ground object is set at 0.6.

Specifically, when the earth surface is disposed as the ground object, the volume of the channel for the character A footstep data is 1.0×0.6=0.6, the volume of the channel for the high-pitched sound data is 0.7x0.6=0.42, the volume of the channel for the low-pitched sound data is 0.3x0.6=0.18, and the volume of the channel for the ultra-low-pitched sound data is 0.0×0.6=0.0, as illustrated in FIG. 6B. The volume of the channel for the character A part sound data is 1.0×0.6=0.6.

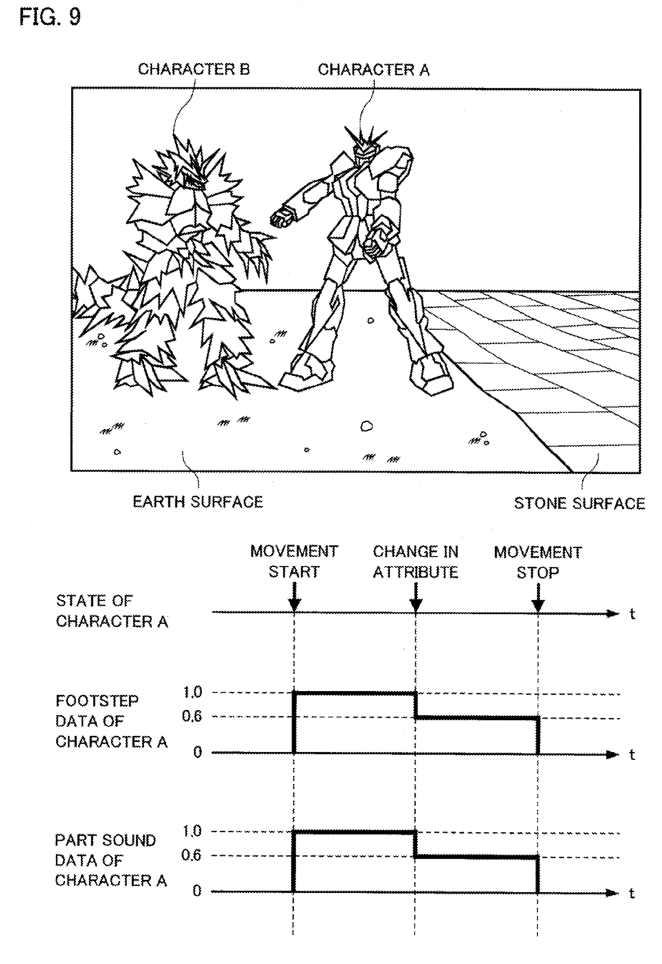

In this embodiment, when the hardness of the ground object on which the character A stands (this is one of various types of contacts) changes due to the movement of the character A, the volume of the footstep data and the volume of the part sound data are changed according to the hardness of the ground object on which the character A stands at a timing at which the hardness of the ground object has changed. For example, when the character A moves from the stone surface to the earth surface, the footstep data and the part sound data of the character A are sequentially read, and the volumes of the footstep data and the part sound data of the character A according to the hardness of the ground object are changed from 1.0 to 0.6 at a timing at which the ground object has changed from the stone surface to the earth surface, as illustrated in FIG. 9.

In this embodiment, when the hardness of the ground object on which the character A stands differs from the hardness of the ground object on which the character B stands, the volumes of the footstep data and the part sound data of each character according to the hardness of the ground object are changed according to the hardness of the ground object on which each character stands. For example, when the character A stands on the stone surface and the character B stands on the earth surface, the volumes of the footstep data and the part sound data of the character A according to the hardness of the ground object are set at 1.0, and the volumes of the footstep data and the part sound data of the character B according to the hardness of the ground object are set at 0.6.

As described above, the game system 10 according to this embodiment determines the type of the ground object on which each character stands, and changes the volume of the footstep and the part sound during reproduction according to the hardness of the ground object on which each character stands. Therefore, the game system 10 can represent a situation in which a sound that occurs when the parts of the character come in contact with each other changes according to the hardness of the ground object on which the character moves when the character moves on the surface of the ground object. As a result, the game system 10 can appropriately represent a state in which the character moves on the surface of the ground object by changing the sound reproduction volume, even if the amount of sound data provided in advance is not increased.

### 4. Flow of process according to this embodiment

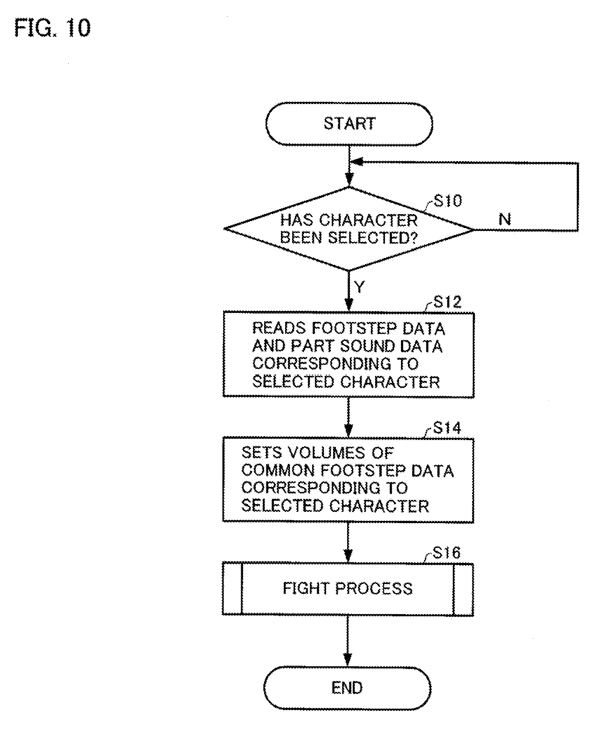

FIG. 10 is a flowchart illustrating the flow of the process performed by the game system 10 according to this embodiment. As illustrated in FIG. 10, when the player's character and the computer character have been selected from the characters A to D (Y in step S10), the game system 10 reads the footstep data and the part sound data corresponding to the selected character from the information storage medium 70 and stores the footstep data and the part sound data in the sound data storage section 88 (step S12). The game system 10 sets the volume of the high-pitched sound data, the volume of the low-pitched sound data, and the volume of the ultra-low-pitched sound data based on the weight of each selected character (step S 14). When a fight has started, the game system 10 performs a fight process (step S16).

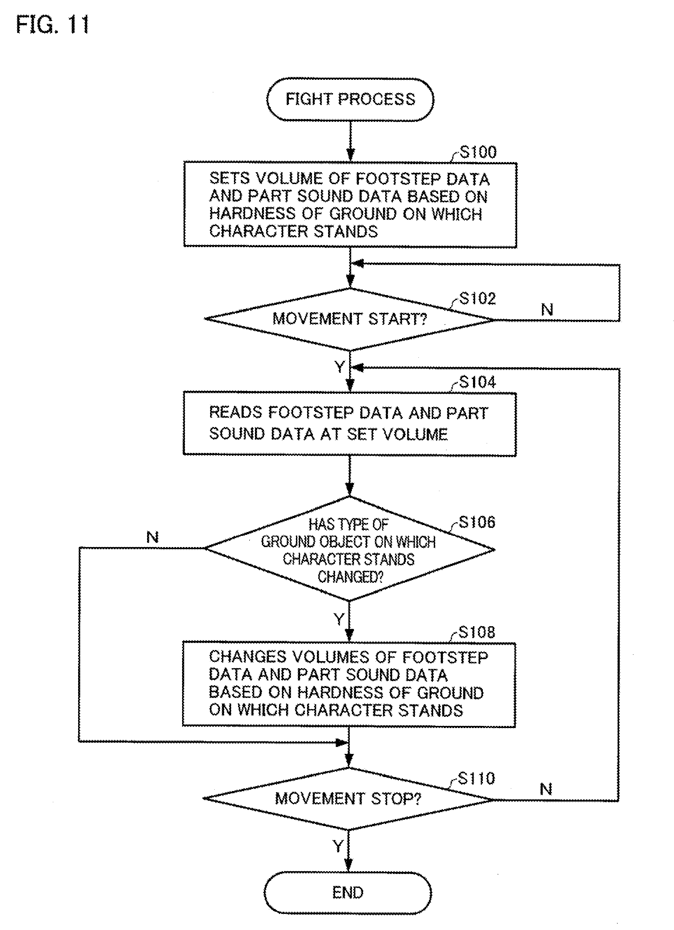

FIG. 11 is a flowchart illustrating the details of the fight process performed in the step S16 in FIG. 10. As illustrated in FIG. 11, the game system 10 determines the type of the ground object on which each character stands, and sets the volume of the footstep data and the volume of the part sound data for each character based on the hardness of the ground object on which each character stands (step S100). When one of the characters has started walking or running (Y in step S102), the game system 10 reads the footstep data and the part sound data of the character at a volume set for the character (step S104).

When the type of the ground object on which the character stands has changed (Y in step S106), the game system 10 changes the volumes of the footstep data and the part sound data of the character according to the hardness of the ground object on which each character stands (step S108). When the type of the ground object on which the character stands has not changed (N in step S106), the game system 10 does not change the volumes of the footstep data and the part sound data of the character.

When the character has stopped walking or running (Y in step S110), the game system 10 finishes the process. When the character continues walking or running (N in step S110), the game system 10 repeats the process from the step S104 to the step S110.

### 5. Modification

The methods described in the above embodiments are provided as examples, and other equivalent methods achieving effects similar to those of the above methods may also be included within the scope of the invention. The invention is not limited to the above embodiments, and various modifications can be made. The above methods and methods described below as modifications may be appropriately combined to be applied as a method for implementing the invention.

The above embodiments have been described taking an example of applying the invention to a game system that executes a fighting game. Note that the invention may also be applied to game systems and simulators that execute various games in which a character at least moves or makes a motion, such as a role-playing game, an action game, a shooting game, and a racing game.

The above embodiments have been described taking an example in which the character simulates a human. Note that it suffices that the character simulate an object that at least moves or makes a motion, such as an animal, a monster, a robot, a car, or an airplane.

Note that the term "character" may be interpreted as part of the character, such as a weapon or a tool used by the character.

The expression "the character comes in contact with another object" includes a case where the character falls down onto another object, a case where the character collides with another object, and the like. Specifically, the first contact sound that corresponds to a sound that occurs when the character comes in contact with another object may be a contact sound other than the footstep.

The term "another object" includes a wall, a ceiling, a bridge, another character, and the like in addition to the ground object.

The term "part of the character" may be a part that moves and makes a motion along with the movement and motion of the character. In this case, the movement/motion control section 110 may control the movement and motion of at least one of the character and the part of the character.

The above embodiments have been described taking an example in which four channels are assigned to the footstep data of each character. Note that the number of channels assigned to the first contact sound and the second contact sound can be arbitrarily set. For example, one channel may be assigned to the footstep data of each character. In this case, the footstep data that differs in tone depending on the weight of each character is provided in advance for each character, and the footstep data corresponding to the selected character is stored in the sound data storage section 88. The volume of the channel for reading the footstep data is set according to the attribute of another object that comes in contact with the character.

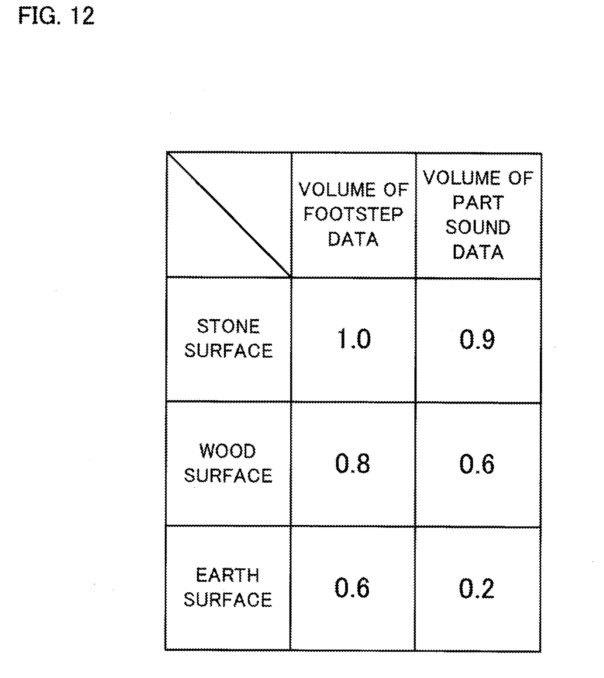

The above embodiments have been described taking an example in which the volumes of the first contact sound and the second contact sound change by an identical value according to the attribute of another object, as illustrated in FIG. 7. Note that the volume of the first contact sound and the volume of the second contact sound according to the attribute of another object may differ from each other, as illustrated in FIG. 12. For example, each value may be set so that the volume of the second contact sound is lower than the volume of the first contact sound.

The change rate of the volume of the first contact sound according to the attribute of another object may differ from the change rate of the volume of the second contact sound. As illustrated in FIG. 12, when the ground object is the earth surface, the volume of the first contact sound may be decreased by about 40% and the volume of the second contact sound may be decreased by about 80% as compared with the case where the ground object is the stone surface. Specifically, an arbitrary value is set so that the volume of the first contact sound and the volume of the second contact sound change according to the attribute of another object in a similar manner.

The above embodiments have been described taking an example in which the volumes of the first contact sound and the second contact sound are similarly changed according to the attribute of the ground object that comes in contact with the character. Note that the tone (an example of a reproduction state) of the first contact sound may be changed according to the attribute of the ground object that comes in contact with the character. For example, the sound control section 112 causes the sound processing section 130 to reproduce a ground sound component that is set according to the type of ground object (an example of an object) and a plurality of common sound components that are set in common for a plurality of ground objects as the first contact sound so that the synthesis ratio of the plurality of common sound components is based on the attribute of the ground object. Specifically, the sound control section 112 may change the tone of the first contact sound for each ground object by setting the volume of each of the plurality of common sound components according to the attribute of the ground object and setting the ground sound component according to the attribute of the ground object.

The sound control section 112 may change the tone (an example of reproduction state) of the second contact sound according to the attribute of the component part of the character. In this embodiment, different attributes (e.g., weight, material, or movable range) are set for a plurality of component parts. The sound control section 112 causes the sound processing section 130 to reproduce a part sound component that is set according to the type of component part and a plurality of common sound components that are set in common for the plurality of component parts as the second contact sound so that the synthesis ratio of the plurality of common sound components is based on the attribute of the component part. Specifically, the sound control section 112 may change the tone of the second contact sound for each component part or according to a combination of the component parts by setting the volume of the plurality of common sound components according to the attribute of the component part and by setting the part sound component according to the attribute of the component part.

Specifically, the sound control section 112 may change the reproduction state of at least one of the first contact sound and the second contact sound according to the attribute of at least one object that comes in contact with the character.

The invention may be applied to various image generation systems such as a portable game system, an arcade game system, a large-scale attraction system in which a number of players participate, a simulator, a multimedia terminal, a system board that generates a game image, and a portable telephone in addition to the stationary consumer game system.

Although only some embodiments of this invention have been described in detail above, those skilled in the art will readily appreciate that many modifications are possible in the embodiments without materially departing from the novel teachings and advantages of this invention. Accordingly, all such modifications are intended to be included within the scope of the invention.

## Claims

1. An image/sound controller comprising:
an object space setting section that sets a plurality of objects including a character in an object space;
a movement/motion control section that controls at least one of movement and motion of the character;
a sound control section that instructs reproduction of a first contact sound that corresponds to a sound that occurs when the character comes in contact with another object among the plurality of objects and a second contact sound that corresponds to a sound that occurs when component parts of the character come in contact with each other when the character has come in contact with the other object;
a drawing section that draws the object space as an image; and
a sound processing section that reproduces the first contact sound and the second contact sound,
the sound control section changing a reproduction state of the first contact sound and the second contact sound according to an attribute of the other object with which the character has come in contact.

2. The image/sound controller as defined in claim 1, wherein the sound control section changes the volumes of the first contact sound and the second contact sound according to the attribute of the other object that comes in contact with the character.

3. The image/sound controller as defined in claim 1 or 2, wherein the sound control section causes the sound processing section to reproduce a sound that corresponds to a sound that occurs when the character moves on a surface of the other object as the first contact sound when the character moves on the surface of the other object.

4. The image/sound controller as defined in any one of claims 1 to 3, wherein the object space setting section sets at least one type of character among a plurality of characters in the object space; and
wherein the sound control section causes the sound processing section to reproduce a character sound component that is set according to the type of character and a plurality of common sound components that are set in common for the plurality of characters as the first contact sound so that a synthesis ratio of the plurality of common sound components is based on the attribute of the character.

5. An image/sound controller comprising:
an object space setting section that sets a plurality of types of objects in an object space;
a movement/motion control section that controls at least one of movement and motion of at least one type of object among the plurality of types of objects;
a sound control section that instructs reproduction of a contact sound that corresponds to a sound that occurs when the objects come in contact with each other when the objects have come in contact with each other;
a drawing section that draws the object space as an image; and
a sound processing section that reproduces the contact sound, the sound control section causing the sound processing section to reproduce an object sound component that is set according to the type of the object and a plurality of common sound components that are set in common for the plurality of types of objects as the contact sound so that a synthesis ratio of the plurality of common sound components is based on an attribute of the object.

6. The image/sound controller as defined in claim 5, wherein the object space setting section sets the plurality of types of objects including a plurality of types of characters in the object space;
wherein the movement/motion control section controls at least one of movement and motion of the plurality of types of characters; and
wherein the sound control section causes the sound processing section to reproduce a first contact sound that corresponds to a sound that occurs when one type of character among the plurality of types of characters comes in contact with another object among the plurality of types of the objects as the contact sound when the one type of character has come in contact with the other object, and causes the sound processing section to reproduce a character sound component that is set according to the type of the character and a plurality of common sound components that are set in common for the plurality of types of characters as the first contact sound so that a synthesis ratio of the plurality of common sound components is based on an attribute of the one type of character.

7. The image/sound controller as defined in claim 5, wherein the object space setting section sets the plurality of types of objects including a plurality of types of characters in the object space;
wherein the movement/motion control section controls at least one of movement and motion of the plurality of types of characters; and
wherein the sound control section causes the sound processing section to reproduce a second contact sound that corresponds to a sound that occurs when a plurality of component parts of one type of the plurality of types of characters come in contact with each other as the contact sound when the plurality of component parts of the one type of the plurality of types of characters have come in contact with each other, and causes the sound processing section to reproduce a part sound component that is set according to the type of each of the plurality of component parts and a plurality of common sound components that are set in common for the plurality of component parts as the second contact sound so that a synthesis ratio of the plurality of common sound components is based on the attribute of each of the plurality of component parts.

8. An image/sound control method comprising:
an object space setting step that sets a plurality of objects including a character in an object space;
a movement/motion control step that controls at least one of movement and motion of the character;
a sound control step that instructs reproduction of a first contact sound that corresponds to a sound that occurs when the character comes in contact with another object among the plurality of objects and a second contact sound that corresponds to a sound that occurs when component parts of the character come in contact with each other when the character has come in contact with the other object;
a drawing step that draws the object space as an image; and
a sound processing step that reproduces the first contact sound and the second contact sound, the sound control step changing a reproduction state of the first contact sound and the second contact sound according to an attribute of the other object with which the character has come in contact.

9. An image/sound control method comprising:
an object space setting step that sets a plurality of types of objects in an object space;
a movement/motion control step that controls at least one of movement and motion of at least one type of object among the plurality of types of objects;
a sound control step that instructs reproduction of a contact sound that corresponds to a sound that occurs when the objects come in contact with each other when the objects have come in contact with each other;
a drawing step that draws the object space as an image; and
a sound processing step that reproduces the contact sound, the sound control step instructing reproduction of an object sound component that is set according to the type of the object and a plurality of common sound components that are set in common for the plurality of types of objects as the contact sound so that a synthesis ratio of the plurality of common sound components is based on an attribute of the object.
